# EUROPÄISCHE PATENTANMELDUNG

(11) **EP 2 180 200 A1**
(43) Veröffentlichungstag der Anmeldung: **28.04.2010**
(21) Anmeldenummer: 09010955.4
(22) Anmeldetag: 27.08.2009
(51) Int. Cl.: F16C 25/06

(54) **Anordnung zur axialen Abstützung einer Welle einer Arbeitsmaschine**

(30) Priorität: 21.10.2008 DE 102008052490
(71) Anmelder: Metso Lindemann GmbH, 40231 Düsseldorf (DE)
(72) Erfinder: van der Beek, August, 41515 Grevenbroich (DE); Kock, Bernhard, 47441 Moers (DE); Weiers, Jochen, 41812 Erkelenz (DE)
(74) Vertreter: Becker, Thomas

(57) **Zusammenfassung**

Die Erfindung betrifft eine Anordnung zur axialen Abstützung einer Welle (10) einer Arbeitsmachine, mit einem in einem Lagergehäuse (20) angeordneten Wellenlager (30) mit einem Innenring (32) und einem Außenring (34), und mit einer in Axialrichtung der Welle (10) wirkenden Federeinheit (40) die sich mit einem ersten Ende am Außenring (34) abstützt und mit einem zweiten Ende in einem separaten Lagerteil (48) geführt ist.

## Beschreibung

Die Erfindung betrifft eine Anordnung zur axialen Abstützung einer Welle einer Arbeitsmaschine.

Eine solche Arbeitsmaschine kann eine Zerkleinerungsmaschine für Hausmüll, Sperrmüll, Holz oder dergleichen sein, wie sie in der EP 1 575 708 B1 offenbart ist. Auf einer Welle sind Scheiben angeordnet, die Schneidzähne aufweisen, die mit der Welle umlaufen und mit starren Messern zusammenwirken, die parallel neben den Schneidzähnen verlaufen. Das zu zerkleinernde Material wird durch die Schneidwirkung zwischen den Schneidzähnen und den Messern zerkleinert.

Im Betrieb einer solchen Zerkleinerungsmaschine kann es zu erheblichen Querkräften im Kontaktbereich zwischen Stator (Messer) und Rotor (Schneidzahn) kommen. Dabei kann die Welle mit den darauf fest montierten Schneidwerkzeugen in eine Richtung gezogen/gedrückt werden. Dies ist in mehrfacher Hinsicht ungünstig: zum einen sollte der Spalt zwischen fest stehendem Messer und rotierendem Schneidzahn möglichst konstant sein, um das Schneiden zu optimieren. Zum anderen wirken erhebliche Kräfte (und gegebenenfalls Momente) auf die Wellenlagerung. Diese, insbesondere Axialkräfte, können so groß werden, dass das Lager, beispielsweise ein als Wälzlager ausgebildetes Festlager, aus seiner Verankerung herausgerissen wird.

Grundsätzlich lassen sich derartige Lager einteilen in Fest-Los-Lager und Stützlager. Bei Stützlagern werden schwimmende Lagerungen und angestellte Lagerungen unterschieden. Bei allen Wellenlagern müssen ein oder zwei Lager axial gesichert werden, um die beschriebenen axialen Kräfte aufnehmen zu können.

Nicht nur bei dem beispielhaft geschilderten Fall eines "Zerreißers", sondern auch bei anderen Anordnungen zur axialen Abstützung einer Welle einer Arbeitsmaschine, ist man bisher von der Überlegung ausgegangen, die Lagerung so zu gestalten, dass auch die stärkst möglichen auftretenden Axialkräfte beziehungsweise die sich aus dem Betrieb der Maschine ergebenen Lasten kompensiert werden können.

Daraus folgt, dass im Stand der Technik eine entsprechende axiale Wellenabstützung für den Normalbetrieb überdimensioniert ist, zumal die größtmögliche Belastung nur selten, falls überhaupt, auftritt. Sie ist dann meist auch sehr groß und teuer.

Andererseits muss bedacht werden, dass dann, wenn Axialkräfte auftreten, die größer sind als die für die Auslegung der Konstruktion gerechneten Kräfte, das Lager und/oder dessen axiale Sicherungselemente beschädigt oder zerstört werden können. Dies kann erhebliche Reparaturkosten verursachen. Darüber hinaus steht die Maschine während der Reparatur still und es kommt zu einem Produktionsausfall. Schließlich muss die Welle wieder neu ausgerichtet werden.

Die Erfindung löst sich von diesen eingefahrenen Konstruktionsregeln. Der Erfindung liegt der grundsätzliche Gedanke zugrunde, die Konstruktion einer Lagerung an den unter Normalbedingungen auftretenden axialen Kräften auszurichten. Sofern es darüber hinaus zu Störungen kommt, bei denen erhöhte Kräfte/Momente auf die Wellenlagerung wirken, wird dem erfindungsgemäß durch folgende Maßnahmen Rechnung getragen:

Die erfindungsgemäße Anordnung zur axialen Abstützung einer Welle einer Arbeitsmaschine sieht ein in einem Lagergehäuse angeordneten Wellenlager mit einem Innenring und einem Außenring vor. Der Innenring ist fest mit der Welle verbunden. Zwischen Innenring und Außenring verlaufen Rollkörper. Die axiale Abstützung erfolgt nunmehr am Außenring, und zwar durch eine Federeinheit, die in Axialrichtung der Welle wirkt und sich mit einem ersten Ende am Außenring des Wellenlagers abstützt. Ein zweites Ende der Federeinheit ist in einem separaten Lagerteil geführt. Treten nun Axialkräfte auf, die größer sind als die Kräfte, für die die Konstruktion ausgelegt ist, kann es zu einer Axialverschiebung des Außenrings des Wellenlagers kommen. Diese wird zu einem Teil durch die Federeinheit kompensiert. Die Federeinheit lässt sich darüber hinaus so ausführen, dass bei Überschreiten einer einstellbaren Maximalkraft die Drehzahl der Welle verringert oder der Wellenantrieb vollständig abgestellt wird.

Eine entsprechende Regelung/Steuerung kann auch andere Maßnahmen vorsehen, sobald eine Abweichung von einem Regel-/Normwert erfasst wird.

Anstelle einer Kraftmessung kann auch eine Wegmessung oder eine gekoppelte Kraft-Weg-Messung im Bereich des Wellenlagers (des Außenrings) erfolgen, um Unregelmäßigkeiten im Betriebsablauf der Arbeitsmaschine bei Axialverschiebung der Welle feststellen zu können.

Die genannte Federeinheit kann grundsätzlich eine mechanische Federeinheit sein; nach einer Ausführungsform besteht die Federeinheit aus einer Kolben-/Zylinder-Einheit, beispielsweise einer hydraulisch arbeitenden Kolben-/Zylinder-Einheit. Über den Öldruck kann die Gegenkraft beziehungsweise die Federwirkung der Einheit eingestellt werden. Über eine entsprechende Regelung kann diese statisch oder dynamisch erfolgen.

Während ein Ende der Federeinheit am Außenring des Wellenlagers anliegt, stützt sich die Federeinheit nach einer weiteren Ausführungsform der Erfindung am gegenüberliegenden Ende an einem Lagerteil, beispielsweise einem Ringkörper ab, welches am Lagergehäuse des Wellenlagers angeschraubt ist. Damit ergibt sich eine Führung der Feder- und Stützeinheit in einem ortsfesten, starren Lagerteil, welches Axialkräfte bei einer Wellenverschiebung aufnehmen kann, wobei eine Abfederung über die zwischen dieses Lagerteil und den Außenring des Wellenlagers eingefügte Federeinheit erfolgt.

Das Lagergehäuse selbst kann wiederum ortsfest montiert sein.

Eine Ausführungsform der Erfindung sieht vor, den Außenring des Wellenlagers - in Axialrichtung der Welle betrachtet - auf der der Federeinheit gegenüberliegenden Seite durch ein ortsfestes Sicherungselement abzustützen. Dieses Sicherungselement kann beispielsweise mit dem Lagergehäuse fest verbunden sein und auf einem Maschinengestell stehen.

Die Erfindung lässt sich bei unterschiedlichen Wellenlagern realisieren, beispielsweise den Lagerungen, wie sie eingangs genannt sind. Hierzu gehören Fest- oder Loslager eines Wälzlagers. Wälzlager sind Konstruktionselemente zum Übertragen radialer und/oder axialer Lasten an rotierenden Teilen, im Rahmen der Erfindung zum Übertragen radialer und/oder axialer Lasten einer rotierenden Welle einer Arbeitsmaschine. Dabei umfasst die Erfindung alle Bauformen solcher Wälzlager, beispielsweise Pendelrollenlager und Kegelrollenlager.

Zu der erfindungsgemäßen Anordnung gehört nach einer Ausführungsform auch eine Regelungseinheit, die in Abhängigkeit von Kräften/Momenten, die auf die Federeinheit wirken, einen zugehörigen Wellenantrieb steuert. Damit wird sichergestellt, dass für den, wie erwähnt in der Regel seltenen Fall einer besonders hohen Axiallast, die entsprechenden Kräfte/Momente rasch erfasst werden können, um dann beispielsweise den Wellenantrieb sofort abschalten zu können und Schäden an der Arbeitsmaschine zu vermeiden. Im nächsten Schritt kann die Störung beseitigt und die Maschine wieder normal in Betrieb genommen werden.

Das erfindungsgemäße Konzept hat den Vorteil, dass auf die im Stand der Technik vorgesehenen Überdimensionierungen, bezogen auf den Regelbetrieb, verzichtet werden kann. Die Anordnung ist so aufgebaut, dass vom Regelbetrieb abweichende Kräfte/Momente in gewissen Grenzen durch die Federeinheit kompensiert werden können; darüber hinausgehende Kräfte/Momente werden erfasst und regeltechnisch verarbeitet, indem die Vorrichtung beispielsweise für Reparaturarbeiten abgeschaltet wird.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert.

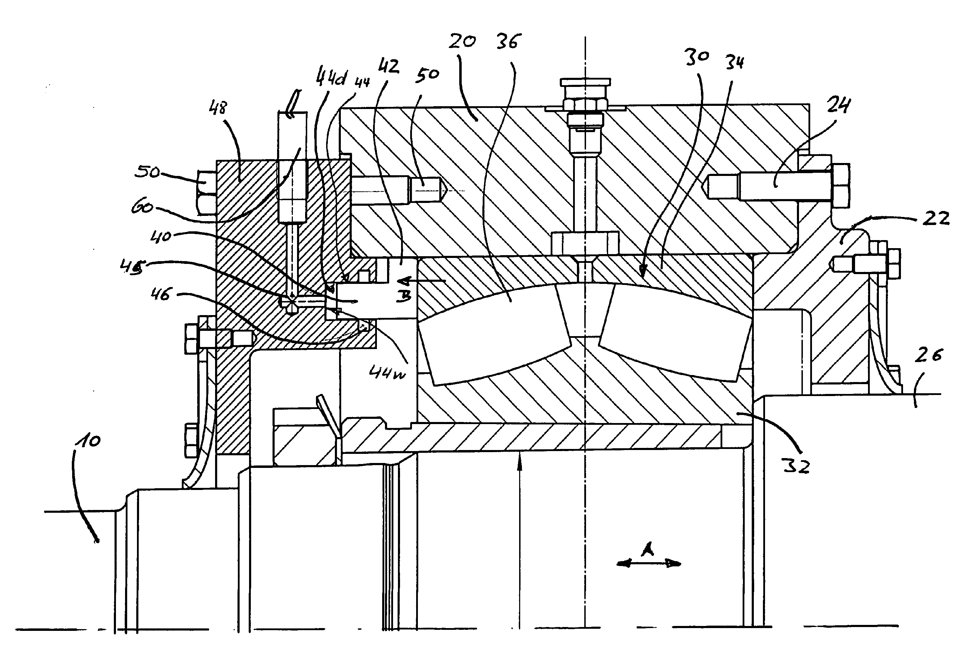

Dabei zeigt die einzige Figur einen vertikalen Schnitt durch eine erfindungsgemäße Anordnung zur axialen Abstützung einer Welle 10 einer Zerkleinerungsvorrichtung gemäß EP 1 575 708 B1.

Die Figur zeigt ein in einem Lagergehäuse 20 angeordnetes Wellenlager 30. Das Wellenlager 30 ist hier ein Fest-Los-Lager in Form eines Wälzlagers und besteht aus einem Innenring 32, einem Außenring 34 und dazwischen angeordneten Rollkörpern (Pendelrollen) 36.

Während der Innenring 32 fest auf der Welle 10 aufsitzt und mit dieser rotiert, ist der Außenring 34 am Lagergehäuse 20 befestigt. Das Lagergehäuse 20 ist über einen Lagerdeckel 22 durch Schrauben 24 an einem Maschinengestell/Maschinengehäuse 26 der Arbeitsmaschine gesichert.

Kommt es im Bereich der Arbeitsmaschine zu einem Störfall, kann dies zu einer Verschiebung der Welle 10 in Axialrichtung (Pfeil A) führen und damit zu einer Verschiebung des Außenrings 34 in Pfeilrichtung B. Zur Abstützung des Außenrings 34 sieht die erfindungsgemäße Anordnung eine Feder- und Stützeinheit 40 vor, die hier wie folgt ausgeführt ist.

Ein Ringkörper 48 ist über Schrauben 50 am Lagergehäuse 20 befestigt. Im Ringkörper 48 verläuft auf dem dem Außenring 34 gegenüberliegenden Abschnitt eine Ringnut 44, in die ein Ringkolben 40 eingesetzt ist. Eine Ringdichtung 46 dient zur Abdichtung zwischen Ringkörper 48 und dem darin geführten Ringkolben 40. Zwischen dem in der Figur linken Ende des Ringkolbens 40 und der gegenüberliegenden Wand 44w der Ringnut 44 ist eine Druckkammer 44d ausgebildet, in die eine Leitung 45 für Hydrauliköl einmündet. Durch den Öldruck kann die auf den Ringkolben 40 wirkende axiale Stützkraft für den Außenring 34 des Wälzlagers eingestellt werden. Die weiteren Anschlüsse der Hydraulikleitung 45, wie Ölpumpe, Manometer, Dichtungen etc. sind wie eine zugehörige Regelungseinheit nur schematisch mit 60 dargestellt.

Die dargestellte Kolben-/Zylinder-Einheit kompensiert eine Axialverschiebung des Außenrings 34 in Pfeilrichtung B bis zu einem gewissen Grad. Bei größeren Axialkräften und damit größerer Axialverschiebung (über einen vorher einstellbaren Grenzwert hinaus) wird dies über den Öldruck gemessen, erfasst und regeltechnisch dahingehend umgesetzt, dass ein (nicht dargestellter) Wellenantrieb umgehend abgeschaltet wird.

Damit entfällt die Notwendigkeit, überdimensionierte Stützlager für die Wellenlagerung vorzusehen, um auch im seltenen Fall einer Betriebsstörung mit überproportionalen Axialkräften auf die Welle eine Zerstörung der Anlage zu verhindern.

Bei einer Fest-Los-Lageranordnung können auf der Festlagerseite beide Lagerdeckel durch eine erfindungsgemäße Anordnung ersetzt werden. Treten, wie bei einem erwähnten Zerreißer, große Kräfte nur in einer Richtung auf, genügt eine Federeinheit auf einer Seite (wie dargestellt).

Bei einer O-Lagerung, X-Lagerung etc. wird in der Regel nur eine Seite in erfindungsgemäßer Weise ausgebildet.

## Patentansprüche

1. Anordnung zur axialen Abstützung einer Welle (10) einer Arbeitsmaschine mit folgenden Merkmalen:
1.1 einem in einem Lagergehäuse (20) angeordneten Wellenlager (30) mit einem Innenring (32) und einem Außenring (34),
1.2 einer in Axialrichtung der Welle (10) wirkenden Federeinheit (40), die sich mit einem ersten Ende am Außenring (34) des Wellenlagers (30) abstützt und mit einem zweiten Ende in einem separaten Lagerteil (48) geführt ist.

2. Anordnung nach Anspruch 1, deren Federeinheit (40) aus einer Kolben-/Zylinder-Einheit besteht.

3. Anordnung nach Anspruch 1, deren Federeinheit (40) aus einer hydraulisch arbeitenden Kolben-/Zylinder-Einheit besteht.

4. Anordnung nach Anspruch 1, deren Lagerteil (48) ein Ringkörper ist.

5. Anordnung nach Anspruch 1, deren Lagerteil (48) am Lagergehäuse (20) angeschraubt ist.

6. Anordnung nach Anspruch 1, deren Lagergehäuse (20) ortsfest montiert ist.

7. Anordnung nach Anspruch 1, deren Wellenlager (30) ein Fest-/Loslager eines Wälzlagers ist.

8. Anordnung nach Anspruch 1, bei der der Außenring (34) des Wellenlagers (30) - in Axialrichtung der Welle (10) betrachtet - auf einer der Federeinheit (40) gegenüberliegenden Seite gegen ein ortsfestes Sicherungselement (22) anliegt.

9. Anordnung nach Anspruch 8, deren Sicherungselement (22) mit dem Lagergehäuse (20) fest verbunden ist.

10. Anordnung nach Anspruch 4, mit einem im Ringkörper (48) geführten Ringkolben (40), der mittels Hydrauliköl, welches über eine Leitung (45) zu einer Druckkammer (44d) transportierbar ist, beaufschlagbar ist.

11. Anordnung nach Anspruch 1 mit einer Regelungseinheit, die in Abhängigkeit von Kräften, die auf die Federeinheit (40) wirken, einen zugehörigen Wellenantrieb steuert.

## Geänderte Patentansprüche

### Geänderte Patentansprüche gemäss Regel 137(2) EPÜ.

**1.** Anordnung zur axialen Abstützung einer Welle (10) einer Arbeitsmaschine mit folgenden Merkmalen:
1.1 einem in einem Lagergehäuse (20) angeordneten Wellenlager (30) mit einem Innenring (32) und einem Außenring (34),
1.2 einer in Axialrichtung der Welle (10) wirkenden Federeinheit (40), die sich mit einem ersten Ende am Außenring (34) des Wellenlagers (30) abstützt und mit einem zweiten Ende in einem separaten Lagerteil (48) geführt ist, sowie
1.3 einer Regelungseinheit, die
1.3.1 in Abhängigkeit von Kräften, die auf die Federeinheit (40) wirken, oder
1.3.2 durch eine Wegmessung oder eine gekoppelte Kraft-WegMessung im Bereich des Außenrings (34) des Wellenlagers (30), bei Axialverschiebung der Welle (10),
Unregelmäßigkeiten im Betiebsablauf der Arbeitsmaschine feststellt und einen zugehörigen Wellenantrieb der Welle (10) steuert.

**2.** Anordnung nach Anspruch 1, deren Federeinheit (40) aus einer Kolben-/Zylinder-Einheit besteht.

**3.** Anordnung nach Anspruch 1, deren Federeinheit (40) aus einer hydraulisch arbeitenden Kolben-/Zylinder-Einheit besteht.

**4.** Anordnung nach Anspruch 1, deren Lagerteil (48) ein Ringkörper ist.

**5.** Anordnung nach Anspruch 1, deren Lagerteil (48) am Lagergehäuse (20) angeschraubt ist.

**6.** Anordnung nach Anspruch 1, deren Lagergehäuse (20) ortsfest montiert ist.

**7.** Anordnung nach Anspruch 1, deren Wellenlager (30) ein Fest-/Loslager eines Wälzlagers ist.

**8.** Anordnung nach Anspruch 1, bei der der Außenring (34) des Wellenlagers (30) - in Axialrichtung der Welle (10) betrachtet - auf einer der Federeinheit (40) gegenüberliegenden Seite gegen ein ortsfestes Sicherungselement (22) anliegt.

**9.** Anordnung nach Anspruch 8, deren Sicherungselement (22) mit dem Lagergehäuse (20) fest verbunden ist.

**10.** Anordnung nach Anspruch 4, mit einem im Ringkörper (48) geführten Ringkolben (40), der mittels Hydrauliköl, welches über eine Leitung (45) zu einer Druckkammer (44d) transportierbar ist, beaufschlagbar ist.
